# EUROPÄISCHE PATENTANMELDUNG

(11) **EP 1 655 208 A1**
(43) Veröffentlichungstag der Anmeldung: **10.05.2006**
(21) Anmeldenummer: 04026248.7
(22) Anmeldetag: 05.11.2004
(51) Int. Cl.: B62D 25/14

(54) **Instrumententafelträgerstruktur**

(71) Anmelder: Alcan Technology & Management Ltd., 8212 Neuhausen am Rheinfall (CH)
(72) Erfinder: Hein, Jörg, 78256 Steisslingen (DE); Gallasch, Olaf, 78224 Singen (DE); Grbavac, Ivan, 78333 Stockach (DE); Zeller, Kuno, 78176 Blumberg (DE)

(57) **Zusammenfassung**

Die Erfindung betrifft eine Instrumententafelträgerstruktur (1) eines Kraftfahrzeuges, enthaltend einen ersten (2) und zweiten (3) Trägerarm und ein die beiden Trägerarme über eine erste und zweite Anbindungsstelle zu einem Querträger verbindenden, einstückig gefertigtes Knotenmodul (5). Die Erfindung zeichnet sich dadurch aus, dass das Knotenmodul (5) eine dritte Anbindungsstelle enthält, mit welchem das Knotenmodul (5) an eine frontseitige Struktur angebunden ist.

## Beschreibung

Vorliegende Erfindung betrifft eine Instrumententafelträgerstruktur eines Kraftfahrzeuges, enthaltend einen ersten und zweiten Trägerarm und ein, die beiden Trägerarme über eine erste und zweite Anbindungsstelle zu einem Querträger verbindenden, einstückig gefertigtes Knotenmodul.

Instrumententafelträgerstrukturen werden in der Automobilindustrie im Karosseriebau verwendet. Als Teil einer Kraftfahrzeugkarosserie ist die Instrumententafelträgerstruktur zwischen den sogenannten A-Säulen, den ersten Säulen in der Seitenwand des Fahrzeuges, die zur Aufnahme einer Vordertüre dienen, angeordnet und über diese mit der Karosserie des Fahrzeuges verbunden. Die Instrumententafelträgerstruktur ist im Bereich unterhalb der Windschutzscheibe etwa horizontal verlaufend angeordnet.

Die Instrumententafelträgerstruktur dient zur Befestigung der Instrumententafel, wobei der Instrumententafelträgerstruktur ausserdem die Aufgabe zukommt, die Instrumententafel auszusteifen. An die Instrumententafelträgerstruktur sind daher Halterungen vorgesehen, an denen die Instrumententafel, ferner eventuell eine Mittelkonsole und die Lenkeinrichtung befestigt werden.

Zur Aussteifung der Instrumententafelträgerstruktur ist diese in der Regel über eine Stützstrebe gegen den Fahrzeugboden, insbesondere gegen den sogenannten Mitteltunnel hin, zusätzlich abgestützt.

Die Hauptkräfte, wie die Abstützkraft an der Lenkung durch den Fahrer sowie die Gewichtskraft durch die Instrumententafel und die Lenkeinrichtung, werden hauptsächlich im Bereich der Fahrerseite auf die Instrumententafelträgerstruktur übertragen, während die Belastungen auf der Beifahrerseite geringer sind. Die Instrumententafelträgerstruktur wird daher üblicherweise mit einem über ihre Längserstrekkung ändernden Profilquerschnitt hergestellt, wobei der Profilabschnitt auf der Fahrerseite in der Regel einen grösseren Querschnitt aufweist, d.h. verstärkt ist, als der Profilabschnitt auf der Beifahrerseite.

Durch eine derartige Querschnitts- bzw. Durchmesseränderung kann die Instrumententafelträgerstruktur auf die lokal auf einen Profilabschnitt einwirkenden Kräfte ausgelegt werden, indem dieser nur an den notwendigen Abschnitten mit einem grösseren bzw. versteifenden Querschnitt verstärkt ist. Diese Konstruktionsweise trägt wesentlich zur Gewichtsoptimierung der gesamten Struktur bei.

Ein weiterer Grund dafür, dass die Instrumententafelträgerstruktur mit nicht konstantem Querschnitt hergestellt wird, liegt darin, dass die Platzverhältnisse in der Instrumententafel in der Regel beengt sind und der Querschnitt daher, wo immer möglich, klein gehalten werden soll.

Die genannte Instrumententafelträgerstruktur ist in der Regel aus einer Vielzahl von Unterbauteilen zusammengesetzt. Es sind bsp. Instrumententafelträgerstrukturen bekannt, welche einen links- und rechtsseitigen Profilarm, ein die beiden Profilarme zu einer Querträgerstruktur verbindendes Knotenelement, einen Lagerbock zur Aufnahme der Lenksäule, eine Halterung zur Anbindung der Querträgerstruktur an einen Scheibenquerträger und eine Halterung zur Anbindung einer Stützstrebe zur Mittelkonsole enthalten.

So beschreibt die EP 1 227 029 A1 eine Instrumententafelträgerstruktur mit einem ersten und zweiten Profilarm sowie einem, die Profilarme zu einer Querträgerstruktur verbindenen Knotenelement, an welches gegebenenfalls auch eine Stützstrebe zur Mittelkonsole festlegbar ist. Weitere Halterungen wie z.B. zur Anbindung der Querträgerstruktur an einen Scheibenquerträger oder zur Anbindung einer Lenkeinrichtung sind zusätzlich notwendig.

Die Herstellung einer Instrumententafelträgerstruktur aus vielen Unterbauteilen ist äusserst aufwendig und komplex. Überdies weisen solche Strukturen eine Vielzahl von Fügestellen auf, welche potentielle Schwachstellen ausbilden. Es ist daher wünschenswert die Anzahl der Unterbauteile soweit wie möglich zu reduzieren und gleichzeitig den Komplexitätsgrad der Trägerstruktur zu senken.

Andererseits sind jedoch auch Mehrkomponenten-Lösungen erwünscht, welche den Einsatz einer Instrumententafelstruktur in verschieden Fahrzeugtypen erlaubt, indem lediglich einzelne Komponente nicht jedoch die gesamte Struktur an die unterschiedlichen Fahrzeuggeometrien sowie Belastungen angepasst werden muss.

Der Erfindung liegt deshalb die Aufgabe zugrunde, eine Instrumententafelträgerstruktur vorzuschlagen, welche aus möglichst wenigen Einzelteilen besteht und den über die Längserstreckung unterschiedlichen Belastungen Rechnung trägt, biegesteif sowie kostengünstig und mit geringem Zeitaufwand herstellbar ist.

Erfindungsgemäss wird die Aufgabe dadurch gelöst, dass das Knotenmodul eine dritte Anbindungstelle enthält, über welche das Knotenmodul an eine frontseitige Struktur angebunden ist.

Die beiden Trägerarme sind bevorzugt seitlich an das Knotenmodul angebunden und sind insbesondere in einem rechtwinkligen Stoss an das Knotenmodul herangeführt.

In bevorzugter Ausführung der Erfindung enthält das Knotenmodul einen in Frontrichtung, d.h. in Fahrtrichtung, weisenden Modularm, über welchen das Knotenmodul an die frontseitige Struktur angebunden ist. Der Modularm ist bevorzugt als verlängerter, langgestreckter Fortsatz am Knotenmodul ausgebildet, welcher sich bis zur Anbindungsstelle an der frontseitigen Struktur erstreckt.

Der Modularm ist bevorzugt als integraler Bestandteil des Knotenmoduls ausgebildet. Der Modularm kann jedoch auch ein über eine Anbindungsstelle am Knotenmodul befestigtes, separates Armelement sein.

Das Armelement kann mit dem Knotenmodul über eine Kalt- oder Warmfügung verbunden sein. Dies kann eine Niet-, Schraub-, Kleb-, oder Schweissverbindung oder eine Kombination der vorgenannten Verbindungstechniken sein.

Der Modularm bzw. das Armelement eignet sich auch zum Ausgleich von Toleranzen zwischen den einzelnen Bauteilen.

Die frontseitige Struktur ist eine in Frontrichtung vor der Instrumententafelträgerstruktur angeordnete Fahrzeugstruktur. Sie kann einem vorderen Teil der Innenkarosserie entsprechen und bsp. als Scheibenquerträger, Stirnwandpaneel oder Windschutzquerträger ausgebildet sein. Ferner kann die genannte Struktur auch ein Flüssigkeitstank, wie Wassertank, sein.

In Weiterentwicklung der Erfindung enthält das Knotenmodul eine vierte, vorzugsweise bodenseitig angeordnete Anbindungsstelle, über welche eine Lenkeinrichtung, insbesondere die Lenksäule einer Lenkeinrichtung, an das Knotenmodul angebunden ist. Die Lenkeinrichtung ist bevorzugt an einer unteren Seite des Knotenmoduls angebunden. Die Anbindungsstelle umfasst bevorzugt bodenseitig angeordnete, nasenförmige Anformungen am Knotenmodul.

Das Knotenmodul enthält ferner bevorzugt eine fünfte Anbindungsstelle, über welche eine zum Fahrzeugboden, insbesondere zu einem Mitteltunnel bzw. Mittelkonsole führende Stützstrebe an das Knotenmodul angebunden ist. Die Stützstrebe kann, analog zu den Trägerarmen, seitlich oder von unten an das Knotenmodul angebunden sein. Zur seitlichen Anbindung an das Knotenmodul, kann die vom Fahrzeugboden zum Knotenmodul geführte Stützstrebe in ihrem Endabschnitt eine Biegung in den Richtungsverlauf der Trägerarme aufweisen.

Das Knotenmodul ist bevorzugt ohne weiteres Zwischenbauteil mit dem ersten, Trägerarm, dem zweiten Trägerarm und/oder der Stützstrebe verbunden. Das Knotenmodul ist ferner bevorzugt ohne weiteres Zwischenbauteil an die frontseitige Struktur angebunden.

Der erste Trägerarm, der zweite Trägerarm und/oder die Stützstrebe können mittels Kaltfügung an das Knotenmodul angebunden sein. Die Kaltfügung kann eine Schraub-, Niet- oder Klebverbindung sein. Ferner können die besagten Bauteile mittels Warmfügung, insbesondere mittels einer Schweissverbindung, an das Knotenmodul angebunden sein. Eine Kombination der vorgenannten Fügetechniken ist ebenfalls denkbar.

Die Trägerarme und/oder die Stützstrebe können auch in eine Ausnehmung oder einen Durchbruch im Knotenmodul gesteckt und mit dem Knotenmodul über eine der vorgenannten Kalt- oder Warmfügung verbunden sein. Die besagten Bauteile sind hierzu bevorzugt formschlüssig in das Knotenmodul gesteckt.

Die Trägerarme und/oder die Stützstrebe können auch auf Vorsprünge im Knotenmodul aufgesteckt, vorzugsweise formschlüssig aufgesteckt, sein und mit dem Knotenmodul über eine der vorgenannten Kalt- oder Warmfügung verbunden sein

Der erste und zweite Trägerarm sind mit ihren freien Endabschnitten direkt oder indirekt über Verbindungselemente, wie Winkelelemente, an seitliche Teile der vorderen Innenkarosserie, insbesondere an die A-Säule angebunden. Die Anbindung kann mittels den oben genannten Fügetechniken geschehen.

Die Stützstrebe ist mit ihren freien Endabschnitten direkt oder indirekt über Verbindungselemente an den Fahrzeugboden, insbesondere an eine Mittelkonsole bzw. an einen Mitteltunnel, angebunden. Die Anbindung kann mittels den oben genannten Fügetechniken geschehen.

Das Knotenmodul kann mittels Kaltfügung an die frontseitige Struktur angebunden sein. Die Kaltfügung kann eine Schraub-, Niet- oder Klebverbindung sein. Ferner kann das Knotenmodul mittels Warmfügung, insbesondere mittels einer Schweissverbindung, an die frontseitige Struktur angebunden sein. Eine Kombination der genannten Fügetechniken ist ebenfalls denkbar.

Der erste und/oder zweite Trägerarm und/oder die Stützstrebe können Extrusionsprofile oder aus einem Walzprodukt, insbesondere einem Walzblech, sein. Das Walzprodukt ist hierzu bevorzugt mittels Rollformen oder Abkanten zu einem Hohlprofil geformt und über Schweissverbindungen zum besagten Bauteil gefügt. Die besagten Bauteile können auch aus verschweissten Halbschalen, insbesondere Blechhalbschalen, hergestellt sein. Die Trägerarme und/oder die Stützstrebe können ebenfalls aus längsverschweissten Rohrprofilen oder gezogenen Profilen bestehen.

Der erste und/oder zweite Trägerarm und/oder die Stützstrebe können einen polygonalen, bsp. rechteckigen oder sechseckigen Querschnitt, oder einen rundlichen, bogenförmigen, insbesondere kreisförmigen, Querschnitt aufweisen. Ferner sind auch Kombinationen von polygonalen und bogenförmigen Profilaussenkonturen denkbar. Der erste Trägerarm ist jedoch bevorzugt als Kastenprofil ausgebildet. Der zweite Trägerarm ist bevorzugt als Rohrprofil ausgebildet.

Der erste und/oder zweite Trägerarm und/oder die Stützstrebe sind bevorzugt aus einem aus einem Metall, bsp. aus Stahl und insbesondere aus Aluminium bzw. einer Aluminiumlegierung oder Magnesium bzw. einer Magnesiumlegierung. Die besagten Bauteile können auch aus Kunststoff, insbesondere aus faserverstärktem Kunststoff sein.

Das Knotenmodul ist bevorzugt aus einem Metall, bsp. aus Stahl und insbesondere aus Aluminium bzw. einer Aluminiumlegierung oder Magnesium bzw. einer Magnesiumlegierung. Das besagte Bauteil kann auch aus Kunststoff, insbesondere aus faserverstärktem Kunststoff sein.

Das Armelement kann aus Metall, wie Stahl, Aluminium, bzw. einer Aluminiumlegierung, Magnesium, bzw. einer Magnesiumlegierung, oder aus Kunststoff, insbesondere einem faserverstärkten Kunststoff, sein. Das Armelement kann ein Gussteil, Strangpressteil oder ein geformtes Walzprodukt, insbesondere eine geformtes Blechteil, sein.

Das Knotenmodul ist bevorzugt ein Gussteil, insbesondere ein Druckgussteil. Das Knotenmodul kann jedoch auch ein Extrusionsteil sein, wobei die Extrusionsrichtung bevorzugt in Längsrichtung der Instrumententafelstruktur verläuft. Ferner kann das Knotenmodul auch aus einem Walzprodukt, bsp. Walzblech, geformt sein und fallweise aus gegenseitig verschweissten Einzelelementen gefertigt sein.

Der erste Trägerarm, der zweite Trägerarm, die Stützstrebe, das Knotenmodul und gegebenenfalls das Armelement können aus jeweils unterschiedlichen Werkstoffen gefertigt sein.

An die Trägerarme und/oder Stützstrebe können Halteelemente zur Anbindung von Funktionselementen angebracht sein. Dies können unter anderem sein, Halteelemente zur Anbindung eines Beifahrer-Airbagsystems, eines Handschuhfaches, eines Knieschutzes oder Teilen einer Innenraumbelüftung und/oder Klimatisierung. Zwecks Anbindung von Funktionselementen oder Halterungen, wie Winkelelemente, bzw. zwecks Anbindung der Instrumententafelträgerstruktur an die KarosserieStruktur, kann diese, bzw. können die Trägerarme, insbesondere an ihren Endabschnitten, Ausnehmungen, wie Schlitze oder Lochungen, enthalten.

Die erfindungsgemässe Instrumententafelträgerstruktur weist einen vereinfachten modularen Aufbau unter gleichzeitiger Versteifung der Gesamtstruktur auf, indem die Anbindungspunkte für die Trägerarme, den Stützarm, die Lenkeinrichtung sowie die frontseitige Struktur in ein zentrales Knotenmodul integriert sind. Weitere Verbindungsbauteile, wie Halterungen, Streben (z.B. Frequenzstreben), Lagerbock für Lenkeinrichtung, entfallen.

Die Instrumententafelsträgerstruktur weist dank der Bauteilreduktion eine kompakte Bauweise auf, welche jedoch noch genügend Flexibilität gibt, die Instrumententafelträgerstruktur mit wenig Aufwand den unterschiedlichen Geometrien und Belastungen verschiedener Fahrzeugtypen anzupassen, indem fallweise lediglich einzelne Bauteile, insbesondere das Knotenmodul, konstruktiv angepasst werden.

Die Instrumententafelträgerstruktur findet bevorzugt Anwendung in Kraftfahrzeugen wie Personenkraftwagen (PKW), Kastenwagen, Lieferwagen, Personentransporter, Vans und Kleinbusse.

Im folgenden wird die Erfindung beispielhaft und mit Bezug auf die beiliegenden Zeichnungen näher erläutert. Es zeigen:
Fig. 1: eine perspektivische Ansicht eines ersten Instrumententafelträgers;
Fig. 2: eine perspektivische Ansicht eines zweiten Instrumententafelträgers;
Fig. 3: eine perspektivische Ansicht eines dritten Instrumententafelträgers.

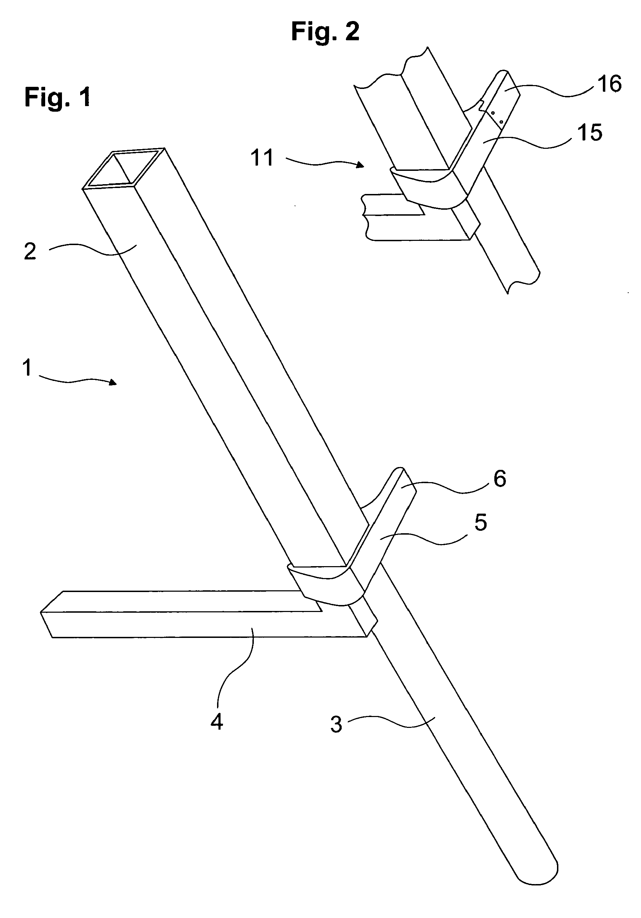

Die schematisch dargestellte Instrumententafelträgerstruktur 1 nach Fig. 1 enthält einen ersten, fahrerseitigen Trägerarm 2 und einen zweiten, beifahrerseitigen Trägerarm 3, welche über ein Knotenmodul 5 zu einem Querträger verbunden sind. An das Knotenmodul 5 ist zur Abstützung der Instrumententafelträgerstruktur 1 auf einer Mittelkonsole (nicht gezeigt) ferner eine Stützstrebe 4 angebunden.

Das Knotenmodul 5 enthält einen frontseitig angeordneten und in Fahrtrichtung weisenden, integralen Modularm 6, über welchen das Knotenmodul 5 und somit die Instrumententafelträgerstruktur 1 an eine frontseitige Struktur, wie Scheibenquerträger, angebunden ist (nicht gezeigt).

Die schematisch dargestellte Instrumententafelträgerstruktur 11 nach Fig. 2 enthält ein Knotenmodul 15, mit einem an dieses befestigten, separaten Armelement 6, über welches das Knotenmodul 15 und somit die Instrumententafelträgerstruktur 1 an eine frontseitige Struktur, wie Scheibenquerträger, angebunden ist (nicht gezeigt).

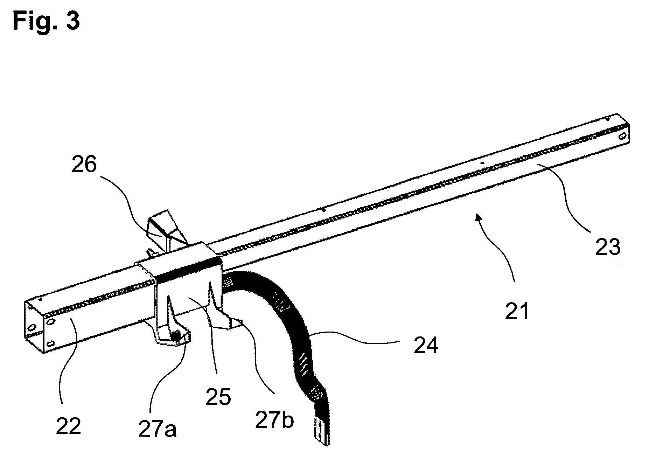

Fig. 3 zeigt eine weitere Ausführungvariante einer erfindungsgemässen Instrumententafelträgerstruktur 21. Ein fahrerseitiger Trägerarm 22, ein beifahrerseitiger Trägerarm 23 sowie eine Stützstrebe 24 sind seitlich in ein Knotenmodul 25 eingesteckt und mit diesem über eine der vorgenannten Kalt- und/oder Warmfügung verbunden. An das Knotenmodul ist ein Modularm 26 angebracht, über welchen das Knotenmodul 25 und somit die Instrumententafelträgerstruktur 21 an eine frontseitige Struktur, wie Scheibenquerträger, angebunden ist (nicht gezeigt). Der Modularm 26 kann integral oder als separates, mit dem Knotenmodul 25 verbundenes Element ausgebildet sein. Das Knotenmodul 25 enthält überdies bodenseitig nasenförmige Anformungen 27a, 27b zur Anbindung einer Lenkeinrichtung, insbesondere einer Lenksäule (nicht gezeigt). Die beiden Trägerarme sind als Kastenprofile und die Stützstrebe als Rohrprofil ausgebildet. Selbstverständlich können die besagten Profile auch andere Querschnitte aufweisen. Die Stützstrebe 24 ist in ihrem bodenseitigen Endabschnitt zu einem doppelwandigen Flachprofil gestaucht und enthält Bohrungen zur Anbindung an einen Mitteltunnel.

## Patentansprüche

1. Instrumententafelträgerstruktur (1) eines Kraftfahrzeuges, enthaltend einen ersten (2) und zweiten (3) Trägerarm und ein, die beiden Trägerarme über eine erste und zweite Anbindungsstelle zu einem Querträger verbindenden, einstükkig gefertigtes Knotenmodul (5),
**dadurch gekennzeichnet, dass**
das Knotenmodul (5) eine dritte Anbindungsstelle enthält, über welche das Knotenmodul (5) an eine frontseitige Struktur angebunden ist.

2. Instrumententafelträger nach Anspruch 1, wobei dritte die Anbindungsstelle einen in Frontrichtung weisenden Modularm (6) am Knotenmodul (5) beinhaltet, mittels welchem das Knotenmodul (5) an die frontseitige Struktur angebunden ist.

3. Instrumententafelträger nach einem der Ansprüche 1 bis 2, wobei der Modularm (6) integraler Bestandteil des Knotenmoduls (5) oder ein über eine Anbindungsstelle am Knotenmodul (15) befestigtes Armelement (16) ist.

4. Instrumententafelträger nach einem der Ansprüche 1 bis 3, wobei das Knotenmodul ein Gussteil, insbesondere ein Druckgussteil ist.

5. Instrumententafelträger nach einem der Ansprüche 1 bis 4, wobei das Knotenmodul (5) eine vierte Anbindungsstelle enthält, über welche eine Lenkeinrichtung, insbesondere die Lenksäule einer Lenkeinrichtung, angebunden ist.

6. Instrumententafelträger nach einem der Ansprüche 1 bis 5, wobei das Knotenmodul (5) eine fünfte Anbindungsstelle enthält, über welche eine zum Fahrzeugboden, insbesondere zu einem Mitteltunnel bzw. Mittelkonsole führende Stützstrebe (4) angebunden ist.

7. Instrumententafelträger nach einem der Ansprüche 1 bis 6, wobei die frontseitige Struktur ein Scheibenquerträger, ein Stirnwandpaneel, ein Windschutzquerträger oder ein Flüssigkeitstank ist.

8. Instrumententafelträger nach einem der Ansprüche 1 bis 7, wobei der erste Trägerarm (2), der zweite Trägerarm (3) und/oder die Stützstrebe (4) mittels Kaltfügung, insbesondere mittels Schraubverbindungen oder Nietverbindungen, an das Knotenmodul (5) angebunden sind.

9. Instrumententafelträger nach einem der Ansprüche 1 bis 8, wobei das Knotenmodul (5) mittels Kaltfügung, insbesondere mittels Schraubverbindungen oder Nietverbindungen, an die frontseitige Struktur angebunden ist.
